# EUROPEAN PATENT SPECIFICATION

(11) **EP 2 592 362 B1**
(45) Date of publication and mention of the grant of the patent: **14.09.2016**
(21) Application number: 12191886.6
(22) Date of filing: 08.11.2012
(51) Int. Cl.: F24H 1/26, F24H 1/40

(54) **Flameless boiler for producing hot water**
Flammlose Wassererhitzer für die Erzeugung warmes Wasser
Chauffeur sans flamme pour la production d'eau chaude

(30) Priority: 08.11.2011 IT MI20112023
(43) Date of publication of application: 15.05.2013
(73) Proprietor: Politecnico Di Milano, Milano (IT); Riello S.p.A., Legnago (IT)
(72) Inventor: Faravelli, Tiziano, 20143 Milano (IT); Frassoldati, Alessio, 24060 Tavernola Bergamasca (IT); Visentin, Alessio, 37040 Terrazzo (IT)
(74) Representative: Bergadano, Mirko

(56) References cited:
- EP-A1- 0 598 691
- EP-A1- 0 671 586
- US-A- 5 709 174
- US-A- 6 029 614

## Description

The present invention relates to a boiler for producing hot water. In particular, the present invention relates to a boiler which allows a flameless combustion to be achieved between fuel and comburent.

In a heating plant, the boiler is the apparatus which transforms the energy from fuels into heat and makes it available in a circuit containing water or air, which serves the purpose of distributing the heat in rooms and possibly to the water of the sanitary system.

Certain essential elements stand out in boilers, such as the burner, the combustion chamber, the tube bundle and the vent stack. A non-stoichiometric mixture is formed in the burner, between the fuel and the oxygen contained in the air. The combustion generates a flame which is useful for transmitting heat by thermal conduction, by means of the hot flue gases, and by radiance. The combustion chamber is the boiler section containing the burner. The tube bundle serves the purpose of increasing, as much as possible, the exchange surface between flue gases and water. This consists of a set of tubes which connect the burner to the vent stack, in gas-tube boilers, or in water-tube boilers, the cylindrical bodies. Finally, the vent stack is the external conduit which allows the dispersion of the exhausted combustion products.

The increasing focus on air quality, intended as fundamental component of the quality of life, has resulted in significant changes in the role of technology, which is called not only to operate downstream of the production cycle, with purification systems, but also in all the steps of the cycle to prevent the formation of pollutants intended to be dispersed into the atmosphere. In this sense, although attempts to optimize combustion processes by means of interventions on the burner, on the fuel/comburent mixture, on the combustion chamber and on combustion products have achieved satisfactory results in several application fields, they have pressed for the search for a combustion system promoted by an "ideal flame", which results in easily controllable, clean combustion.

The efficiency of a boiler is quantified in terms of combustion efficiency, which is the percentage of energy deriving from the combustion transferred to the convective fluid. In other words, the greater the boiler efficiency, the greater the fuel saving, that is the greater the energy and economic saving.

In traditional boilers, the burner allows the air (comburent) to be mixed with the fuel, thus allowing the flame development. Combustion products, such as hot gases, circulate in contact with the tube bundle, containing the water (or rarely air) which is thus heated. Therefore, with such boilers, the energy contained in the fuel is partly transferred to the convective fluid, partly dispersed with the exhaust gases through the vent stack and partly dispersed by the body of the boiler.

Traditional boilers are equipped with a burner in which the comburent air is conveyed with a constant flow. These have average efficiency which is about 85-86%, but in less cold periods, when not all the available power is delivered, efficiency significantly drops because, since there is no significant control of the comburent air, combustion does not occur under optimal conditions. Accordingly, the consumption of fuel, and the pollution developed by the combustion, increase correspondingly. In order to improve the efficiency and reduce costs and consumption, high efficiency boilers are known in which almost all (over 90%) the energy contained in the fuel is transferred to the convective fluid. These include premix boilers and condensing boilers.

The increased energy performance of the burners is generally obtained with regenerating systems, which allow the energy contained in the exhaust gases to be recovered, thus obtaining a preheating of the comburent air. However, this results in a raising of the maximum temperatures in the system, with consequences that cannot be neglected in terms of the formation of NOx (nitric oxides, which are harmful for the environment) through the heating mechanism.

Premix boilers are equipped with a special burner in which combustion always occurs under optimal conditions, due to the perfect balancing between fuel, usually methane, and comburent air. Thereby, efficiency is kept constant, above 90% at any power, therefore also in not particularly cold periods, when less power is required than the rated output. Therefore, premix technology ensures consumption reduced by 10% with respect to a traditional boiler, with subsequent economic saving and fewer pollutant emissions.

Condensing boilers allow part of the heat contained in the exhaust gases to be recovered in the form of water vapour, thus allowing improved exploitation of the fuel and hence the achievement of higher efficiencies. In traditional boilers, burnt gases are normally exhausted at a temperature of about 110 °C and partly consist of water vapour. In the condensing boiler, before being exhausted externally, the combustion products are forced to cross a special exchanger inside of which the water vapour condenses, thus transferring part of the latent condensation heat to the water of the primary. Thereby, the exhaust gases escape at a temperature of about 40 °C. The energy supplied being equal, the condensing boiler provides less consumption of fuel with respect to a traditional one. The percentage of energy that can be recovered by condensing the water vapour contained in the exhaust gases is indeed about 16-17%. Condensing boilers express their maximum performance when they are used with plants which operate at a low temperature, 30-50 °C, such as for example radiant panel plants.

U.S. Patent 6,287,111 describes a heating system, such as a boiler, made by the division into two interconnected chambers, the first equipped with at least one feeding burner and the second equipped with at least one receiving burner. The thermal power of these units may be equal or different to meet heat recovery needs and the needs of the receiving burner for feeding the exhaust gas. The fuel is fed both for the feeding burners and for the receiving ones. The heat generated by both burners heats the fluid to be introduced into the heating system. The flue gases exiting from the feeding compartment are introduced and mixed in air supply of the receiving burners, similar to what occurs in the conventional recirculation of low NOx exhaust gases (FGR).

Although the NOx emissions and the use of fuel are limited, such a device uses solutions which are not able to simultaneously ensure production and management economy and increased reliability. Indeed, a gas recirculation technology (FGR - Flue Gases Recirculation) has been used simply achieved by means of a fan, for recovering the cold flue gases. Such a system, therefore, is not capable of sustaining a flameless combustion while simultaneously using the recirculation of the flue gases. Moreover, the need for two stages for the burners involves increasing costs and dimensions of the boiler.

Innovative combustion systems have been developed in the search to optimize the burners and the combustion processes in general, up to the extreme choice of turning off the burner flame of the combustion chamber. Raising the efficiency of such systems and minimizing the pollutant emissions are indeed at the basis of the development of flameless combustion (FTO, Flameless Thermal Oxidation). This consists in reducing the pollutant emissions while standardizing the combustion process by eliminating the discontinuities generated by any type of flame or burner.

A significant recirculation of the exhaust gases in the combustion zone, associated with an increased preheating of the inflows, allows the standard flame structure to be significantly modified, thus determining the achievement of a status of reactivity which is widespread and extends to the entire volume of the combustion chamber. The comburent air is diluted due to the effect of the mixing with the exhaust gases and thus the concentration of oxygen in the reaction zone is much lower than the atmospheric value of 21%. Raising the temperature of the fluid subsequent to the oxidation reactions is thus limited to a few hundreds of Kelvin degrees, thus making the preheating effect of the air negligible. Decreasing the temperature gradients in the system allows the nitric oxide emissions to be drastically reduced, even with preheating air temperatures over 800-900 °C. This combustion mode is generally indicated as flameless combustion, being characterized by the lack of a defined flame front. Conventional thermal oxidization, that is carried by a burner of any technology, is a process which is affected and governed by three macro-variables, which are closely correlated to each other in a non-hierarchical way: Temperature, Time, and Turbulence. The processes which occur inside a combustion chamber are, therefore, the result of a series of interacting phenomena of fluid mechanics, chemical-kinetic nature and of radiant and convective heat exchange nature. The various local conditions created in the different zones of the flame and of the combustion chamber are the effect of this phenomena overlapping. This implies that the formation of many pollutant compounds is associated with such local conditions (temperatures which are too high or too low, compositions which are too rich or too poor).

The use of techniques providing the flame dilution associated with an increased preheating of the inflows is at the basis of the technology called *"MILD" (Moderate or Intense Low-Oxygen Diluition)* or "flameless", which allows the standard structure of a combustion system to be significantly altered, thus achieving a status of reactivity which is widespread and extends to the entire volume of the combustion chamber. This technology has significant advantages, both in terms of reducing pollutant emissions (NOx, carbonaceous particulate and trace elements), and in relation to the heating efficiency of the plant.

Flame dilution is one of the primary strategies for preventing the formation of NOx and of particulate. It is generally obtained due to the use of lean mixtures, of bad oxidative flows or by means of recirculating the flue gases. Flame stabilization in conventional burners is generally obtained by using devices which determine the formation of internal recirculating zones of the combustion gases, in which the flow speed equals the flame speed.

This provides a constant source of ignition for the reaction mixture, the combustion of which concentrates in the flame front, which is the zone of gasdynamic discontinuity which separates the burnt gases from the unburnt ones. Such an area is characterized by thermal gradients and by strong concentrations. Indeed, the radical reactions which are at the basis of the combustion process are concentrated in a variable thickness of some tenths of a millimeter to a few millimeters.

Raising the temperature subsequent to the oxidation of the fuel is much more significant and the local temperatures may reach values close to the adiabatic flame temperature (temperature reached by the flame under adiabatic conditions) equal to 1800-2000 °C. The existence of high thermal gradients in the flame front allows the stability thereof to be improved, but is the main cause for the formation of nitric oxides. Increasing the recirculation of the gases exhausted at the flame root results in increased inert content in the reaction mixture.

Different burners are known, which have been developed to be able to alternatively operate under flame or flameless conditions according to the speed of the exiting jet and of the subsequent direct recirculation of the burnt gases which are conveyed into the flame due to its raised moment, thus allowing the new technology to be coupled with existing ones.

The main features of flameless combustion are to be attributed to the lack of a flame front and to the presence of a substantially homogeneous reaction volume. The preheating conditions may not necessarily be obtained by means of a direct recirculation of the flue gases, but also by means of the sole recirculation of the heat, through a system for transferring the heat from the products to the reactants. Not only does such a system allow fuel mixtures with a low calorific value to be used, but also significant results to be achieved in terms of efficiency and energy saving. The maximum temperature reached in combustion depends on the quality of recycled heat and does not greatly depend on the calorific value of the fuel or on the stoichiometric ratio with the comburent.

A fuel at ambient temperature has a more or less extended inflammability range and centered about the composition of the stoichiometric mixture, the limits of such a range increasing as the temperature increases. The combustion domain for a fuel with a low calorific value may even be null at ambient temperature and may only appear above a given threshold temperature. For this reason, the preheating technique becomes essential should particularly lean or poor mixtures be involved, which may for example originate from the processing industry.

EP-A1-0 671 586 refers to a catalytic burner. The burner gives flameless combustion of a mixture of inflammable gas and air. Where the amount of gas mixture converted in the second stage is excessive, the temperature rise can increase the heat transferred to the first stage, thus increasing conversion of the mixture in the latter. Conversely, where the amount converted in the second stage is too small, it receives more heat from the first stage due to the temperature rise in the latter, thus increasing conversion in it. The first stage can be formed by a gap-type burner enclosing a cylindrical body, inside which is an afterburner forming the second stage. Heat-exchange between the burners takes place via the wall of this body.

US-5 709 174 refers to a liquid fuel catalytic burner. A hot water heater has an inlet for liquid fuels, a plurality of inlets for fresh air, an inlet for a fluid to be heated, at least two combustion stages traversed by the fuel-air mixture with catalytic combustion chambers surrounded at least partially by at least one fluid chamber filled with fluid and with an offgas heat exchanger for fluid to be heated. The heat exchanger is traversed by the offgas escaping from the combustion chambers. The first combustion stage has an evaporation chamber that has on its outside surface, at least a partial catalyst layer.

It would therefore be desirable to have a flameless combustion boiler with cold walls and very low NOx emissions.

Furthermore, it would be desirable that such a boiler could be made with contained dimensions and reduced costs. It would also be desirable that such a boiler have increased flexibility in the use of fuel with variable mixtures of methane (or natural gas) and hydrogen.

Within the scope of the aforesaid task, it is an object of the present invention to provide a boiler capable of drastically reducing the temperature peaks, thus reducing the formation of NOx.

A further object of the present invention is to provide a boiler capable of ensuring elevated reliability during the generation of energy, so as to ensure the proper operation thereof at any moment, while simultaneously minimizing the harmful emissions and the use of fuel. Another object falling within the aforesaid task is the one of providing a boiler consisting of a minimum number of components, therefore with reduced cost of production and assembly.

Furthermore, a further object of the present invention is to provide a boiler with contained dimensions.

The above-mentioned objects are achieved by a boiler for producing hot water comprising a burner, fuel feeding means for the burner and comburent feeding means for the burner, a combustion chamber, adjacent and operatively connected to the burner, for the flameless combustion of fuel and comburent. The boiler is characterized in that it comprises a plurality of tubes for preheating the comburent, at least partly arranged within the combustion chamber and connected to the comburent feeding means.

With the above-described features, the boiler according to the invention provides to balance the internal temperature for reaching flameless combustion operation, by using the same burner for the preventive heating of the comburent. The passage of the comburent within the combustion chamber allows the boiler to autonomously reach the flameless condition, thus optimizing and raising the temperature of the entering comburent and, simultaneously, lowering the combustion chamber to the useful temperature.

Preferably, the boiler further comprises at least one heat exchanger for cooling the flue gases. In particular, the heat exchanger is operatively connected to the combustion chamber for recirculating the cooled flue gases.

Even more preferably, the heat exchanger is operatively connected to the preheating tubes for mixing the recirculated flue gases. Thereby, the flue gases transfer part of their thermal energy, thus contributing to heating the water and, simultaneously, are cooled to allow a more efficient use thereof in the recirculation. Preferably, the boiler comprises means for the forced ventilation of the comburent and/or of the cooled flue gases within the combustion chamber.

Even more preferably, the boiler comprises means for regulating the flow of the comburent and/or of the flue gases to be emitted within the combustion chamber. Thereby, it is possible to use flameless combustion operation while expanding the combustion area due to the increased flow of the comburent and/or of the recirculated flue gases.

Preferably, the boiler comprises a hydraulic cooling circuit for the combustion chamber. Thereby, it is possible to control the temperature of the combustion chamber such as to ensure flameless operation, while simultaneously providing to heat the water to be used in the heating plant.

Preferably, the combustion chamber is equipped with a radiant tube arranged axially in the middle section of the boiler. Even more preferably, the preheating tubes and/or the hydraulic cooling circuit are accommodated in the combustion chamber, outside the radiant tube. In particular, the preheating tubes and/or the hydraulic cooling circuit may be in contact with the outer surface of the radiant tube. Thereby, a more accurate control of the temperature within the combustion chamber is achieved due to the heat exchange by conduction, in addition to convection, between the radiant tube and the preheating tubes and/or between the radiant tube and the hydraulic cooling circuit.

Preferably, the boiler comprises a flue gas circulation circuit, which is operatively connected to the combustion chamber and to the heat exchanger. Thereby, the heat exchanger cools the flue gases exiting from the combustion chamber, which are then reintroduced mixed together with the comburent.

Further features and advantages of the present invention shall be more apparent from the description of preferred embodiments, disclosed by way of non-limiting example, with the aid of accompanying figures, in which:
- figure 1 is a perspective sectional depiction of the preferred embodiment of the boiler according to the present invention;
- figure 2 is a perspective diagrammatic depiction of the radiant tube, of the preheating tubes and of the hydraulic cooling circuit of the boiler in figure 1, according to the present invention;
- figure 3 is a diagrammatic depiction of the interaction between the boiler and the heat exchanger, according to the present invention.

With reference to the mentioned figures, a boiler 1 for producing hot water for household use is depicted. This comprises a burner 10, fuel feeding means 110 and comburent feeding means 210 for burner 10. Boiler 1 is also provided with a combustion chamber 20, adjacent and operatively connected to burner 10 which achieves the flameless combustion of the fuel and comburent supplied. In particular, the combustion chamber 20 is equipped with a radiant tube 520 arranged axially in the middle section of boiler 1, which extends for the entire length thereof.

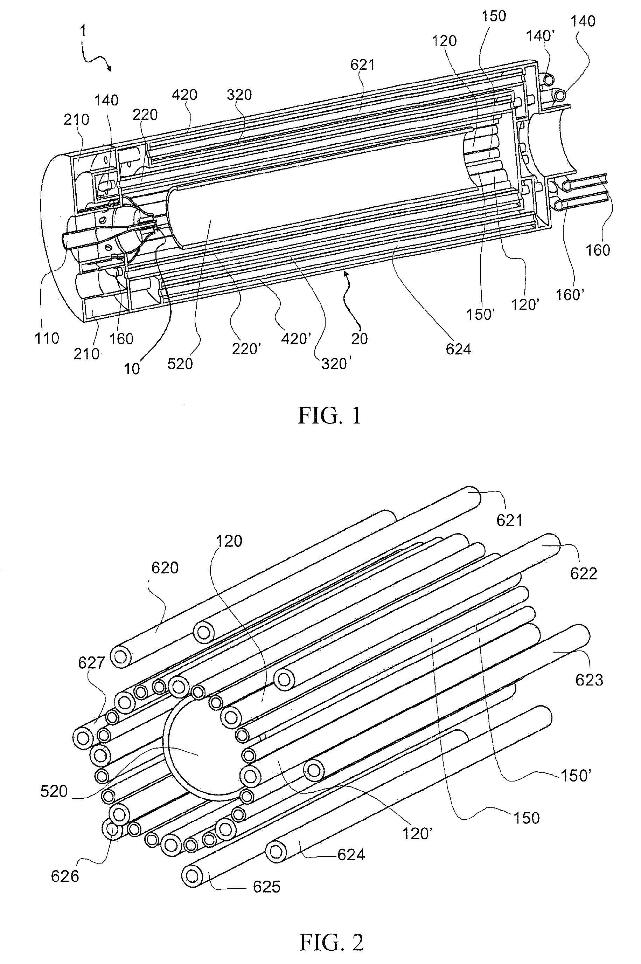

As shown in figure 2, boiler 1 comprises a plurality of tubes 120, 120', 220, 220', 320, 320', 420, 420' for preheating the comburent, at least partly arranged within the combustion chamber 20 and connected to the comburent feeding means 210.

Boiler 1 further comprises a hydraulic cooling circuit for the combustion chamber 20, achieved by means of a further plurality of pipes 140, 140', 150, 150', 160, 160', which are crossed by fluid, which, in the preferred embodiment, consists of the water to be heated. Furthermore, boiler 1 in said embodiment further comprises a flue gas circulation circuit 621, 622, 623, 624, 625, 626, 627, 628, operatively connected to said combustion chamber 20.

In the preferred embodiment herein described, the preheating tubes 120, 120', 220, 220', 320, 320', 420, 420' and the hydraulic cooling circuit pipes 140, 140', 150, 150', 160, 160' are accommodated inside the combustion chamber 20 but arranged outside the radiant tube 520. In particular, these are close to the outer surface of said radiant tube 520. Thereby, a more accurate control of the temperature within the combustion chamber 20 is achieved due to the convective heat exchange with the flue gases, and the radiant exchange with the radiant tube 520 and the preheating tubes 120, 120', 220, 220', 320, 320', 420, 420' and between said radiant tube and the hydraulic cooling circuit 140, 140', 150, 150', 160, 160'.

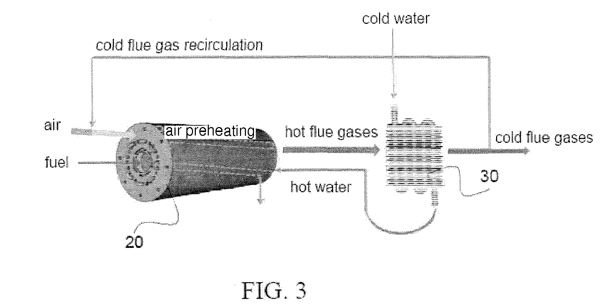

As shown in figure 3, the boiler is further equipped with a heat exchanger 30 for cooling the flue gases. In particular, the heat exchanger 30 is located outside, but operatively connected to, the combustion chamber 20. In the embodiment described, this is achieved with a conventional heat exchanger for condensing boilers. The heat exchanger 30 is operatively connected to the preheating tubes 120, 120', 220, 220', 320, 320', 420, 420' for mixing said recirculated flue gases, thus ensuring the recirculation of the cooled flue gases. Furthermore, the heat exchanger 30 is operatively connected to the flue gas circulation circuit 621, 622, 623, 624, 625, 626, 627, 628. The connection of the heat exchanger 30 to the preheating tubes and to the flue gas circulation circuit provides for the transfer of thermal energy therefrom towards the water to be heated, thus increasing the boiler efficiency.

Boiler 1 also comprises means for the forced ventilation (not shown) of comburent and flue gases cooled within the combustion chamber 20. In the preferred embodiment, these are achieved by means of a fan arranged at the inlet of the combustion chamber 20, but they may be equally achieved by means of various devices serving the same purpose.

In order to control the flow and speed of comburent and flue gases emitted into the combustion chamber 20, boiler 1 is equipped with means for regulating the flow (not shown) thereof. In the preferred embodiment, such means are achieved by using a throttle valve arranged at the inlet of burner 10. In particular, such means allow regulating speed and flow, before boiler 1 is put into operation, in relation to the different mixture of comburent to be used.

Boiler 1 according to the present invention is capable of significantly reducing the pollutant emissions resulting from combustion, in flameless combustion operation (mild or flameless). Thereby, boiler 1 allows reducing the nitric oxides but is also capable of effectively inhibiting the formation of the main standard pollutants of combustion processes, such as carbon monoxide (CO) and polycyclic aromatic hydrocarbons (IPA o PAHs).

The flameless operation of boiler 1 is correlated with the significant reduction of the temperature peaks through the enlargement of the reaction zone, which develops within the radiant tube 520, as described below. In particular, the flameless combustion zone requires high recirculation values of the burnt gases and temperatures over a minimum value beyond which the system becomes unstable.

This embodiment describes a use of boiler 1 for heating hot water for household use. In particular, boiler 1 is firstly started in traditional mode, with the development of an apparent flame, and then operation stabilizes in flameless mode. The reference fuel for the subsequent description of the operation of said boiler 1 relates to a methane mixture, which may comprise hydrogen. The modifications required to use the same with fuel consisting of hydrogen alone, are described later.

Burner 10 is fed with air preheated in flameless mode to a temperature of about 1000K, while the initial traditional combustion process with apparent flame development occurs with non-preheated air. The preheating of the air occurs by means of the same passing within a plurality of tubes 120, 120', 220, 220', 320, 320', 420, 420' designed to preheat the comburent. Being accommodated inside the combustion chamber 20 but arranged outside and exposed to the outer surface of the radiant tube 520, these allow the temperature value which is compatible with the stability of flameless combustion operation (usually over 800 °C) to be achieved.

Therefore, the indirect contact of the comburent with the developed flue gases ensures the preheating of the air, which is useful for achieving, and keeping, flameless combustion operation.

The recirculation of the burnt gases in boiler 1 is achieved by emitting the reactants into burner 10, and therefore, into combustion chamber 20 with a high speed jet, by forced ventilation means, which in the embodiment herein described, are achieved by means of a fan arranged at the inlet of burner 10. Thereby, the turbulence generated by the jet is capable of drawing, from the core of the combustion chamber 20, a large quantity of flue gases. The flow of the fed reactants determines the speed of the jet and, therefore, the increase of the recirculated exhaust gases which dilute the reaction mixture. The increased turbulence, which improves the mixture and the distribution of the reactants in the combustion chamber 20, combined with the low concentration of oxygen in the reaction mixture allows a flameless combustion process to be obtained, which extends within the radiant tube 520. Therefore, the ignition of the reaction mixture no longer relies on the presence of a flame but on the increased temperature of the recirculated gases exhausted from boiler 1 within the combustion chamber 20 and in particular, within the radiant tube 520. Significant potential is associated with the recirculation of the cold flue gases and may result in flameless combustion operation characterized by low NOx emissions.

In the start-up step in traditional mode (so-called flame), the recirculation of the flue gases may be interrupted or decidedly limited in order to make the heating of the system faster until the conditions which are compatible with flameless combustion are achieved. This solution is also advantageous in operation at speed, due to the possibility of regulating boiler 1 according to the type of fuel, thus using increased recirculation if there is an increased presence of hydrogen in the fuel.

Flameless combustion, that is without a definite and visible flame during the performance of the combustion reaction, allows the reduction of nitric oxides by about 100 times (from 1000 up to about 10 ppm), while maintaining energy efficiency comparable with the one of traditional combustion processes with a scattered or premixed flame, as described above. Through significant preheating of the combustion air (or gas) and an increased recirculation of the burnt gases, as hereinafter described in detail, it is possible to develop a combustion reaction "distributed" inside the combustion chamber 20 and in particular, within the radiant tube 520, thus preventing the concentration on a flame front of burner 10. Therefore, the enlargement of the combustion zone promotes the homogenization of the temperature inside the combustion chamber 20 which in turn involves a levelling of the temperature peaks responsible for the formation of the nitric oxides of thermal origin.

The flue gases generated within the combustion chamber 20 reach the heat exchanger 30, after having already transferred part of their thermal energy to the preheating tubes 120, 120', 220, 220', 320, 320', 420, 420' and to the hydraulic cooling circuit 140, 140', 150, 150', 160, 160'. These therefore act as a first heat exchanger inside boiler 1. The flue gases, already cooled by the simultaneous preheating of air and water, are therefore further cooled by the heat exchanger 30, as known in condensing boilers, by placing them in contact with cold water.

To prevent too high temperatures from being reached inside the combustion chamber 20, the water is caused to pass inside boiler 1 with a suitable hydraulic cooling circuit 140, 140', 150, 150', 160, 160'. The internal flue gases heat the water which crosses boiler 1 by means of said hydraulic circuit. This allows both the internal temperature of boiler 1 to be decreased and the materials forming it to be protected from excessive overheating. Finally, as the temperature decreases, the combustion process becomes less stable and boiler 1 shuts off.

As described above, boiler 1 is capable of operating with mixtures with a different composition of methane and hydrogen. As the composition of the fuel varies, in terms of the H2/CH2 ratio, that is as the hydrogen content increases the combustion process becomes more reactive and allows the power transmitted to the hydraulic cooling circuit 140, 140', 150, 150', 160, 160' to be increased.

Due to the effect of the different reactivity of the methane and of its hydrogen enriched mixtures, the possibility of regulating is therefore provided, which allows the wanted operating flexibility to be obtained so as to be able to operate in flameless combustion operation with all the usable fuel mixtures, also with increased high hydrogen contents (if necessary 100% hydrogen).

In order to deal with the variability associated with the start-up transient of the boiler 1, the regulation of the temperature of boiler 1 to the various external ambient conditions and to the variation of feeding fuel is provided by recirculating part of the preliminarily cooled flue gases, drawn downstream of the external heat exchanger 30. There is also a need for such a recirculation, in particular, to lower the NOx emissions which decrease very rapidly as the cooling entity increases, up to reaching values of 5-10 ppm. Furthermore, the presence of hydrogen makes the system more reactive and requires lower preheating temperatures of the air.

The throttle valve arranged at the inlet of burner 10 is capable of varying the passage section for the air. Increasing the section involves decreasing the losses of load and a subsequent decrease of the internal recirculation ratio of the flue gases. Therefore, decreasing the speed of the air jet involves a loss of the features useful to flameless combustion operation, which are correlated with the development of temperature peaks (also above 2000 K). By narrowing the passage stretch, the air jet is accelerated thus ensuring an increased mixture of the combustion ambient and therefore, allowing hydrogen to be used as a fuel.

The introduction of hydrogen enriched comburent mixtures also generates an increase of the NOx emissions, due to the higher temperatures reached by adding hydrogen.

Such an increase is easily compensated for by acting on the flow of cold flue gases recirculated at boiler 1, again by regulating the throttle valve.

The boiler according to the present invention therefore allows flameless combustion operation. This allows the drastic reduction of the temperature peaks thus reducing the formation of NOx.

Advantageously, the boiler according to the present invention uses a single burner and a single combustion chamber with reduced production costs. Furthermore, the use of few construction elements and the interacting methodologies thereof allow a significant reduction of the volumes, even though the requested power is developed.

A further advantage of the boiler according to the present invention is the flexibility in using the fuel, in particular towards a compound with an extremely low environmental impact such as hydrogen. Hence, the boiler is intended to operate with natural gas and mixtures containing various quantities of hydrogen, up to the limit of operating with pure hydrogen.

By increasing the flame temperatures, the hydrogen involves an increased formation of nitric oxides. Such an increment is in any event contained, due to the combustion mode and to the possibilities of managing the boiler. The possibility of operating with hydrogen enriched fuel, or only consisting of hydrogen, contributes to reducing the CO2 emissions, while simultaneously limiting the formation of NOx which is usually associated with the increased percentage of hydrogen in the fuel mixture.

The main advantage of the boiler according to the present invention is indeed the use of flameless operation combustion and the subsequent drastic reduction of NOx emissions. The lack of standard temperature peaks in conventional combustion systems indeed allows the formation of NOx with the heating mechanism to be greatly limited, also in the presence of significant preheating of the comburent air.

In particular, the reduction of nitric oxides emissions by operating with natural gas is significantly reduced within the range of 10mg/Nm3, significantly lower than the current ones, which are about 50-60mg/Nm3. The management of the passage stretch for the air allows the flameless combustion operation to be kept while also using various fuel mixtures and with different hydrogen contents. By narrowing the passage stretch, the air jet is accelerated thus ensuring an increased mixture of the combustion ambient and therefore, allowing hydrogen to be used as a fuel.

Advantageously, the boiler according to the present invention reduces, or if necessary, eliminates the possible effect of cooling on the stability of flameless combustion operation.

For household applications, there is indeed the need to provide the cooling of the heater both for safety reasons and to preserve the integrity of the material and limit the thermal stresses thereof. Therefore, the boiler provides for the cooling of the combustion chamber both due to a hydraulic cooling circuit and due to the recirculation of cold flue gases, cooled by a heat exchanger arranged outside the boiler.

## Claims

1. A boiler (1) for producing hot water comprising a burner (10), fuel feeding means (110) for said burner (10) and comburent feeding means (210) for said burner (10), a combustion chamber (20), adjacent and operatively connected to said burner (20), for the flameless combustion of said fuel and of said comburent,
wherein said boiler (1) comprises a plurality of tubes (120, 120', 220, 220', 320, 320', 420, 420') for preheating said comburent, at least partly arranged within said combustion chamber (20) and connected to said comburent feeding means (210);
wherein it comprises at least one heat exchanger (30) for cooling the flue gases of said combustion, said heat exchanger (30) being located outside but operatively connected to said combustion chamber (20) for recirculating said cooled flue gases;
**characterized in that** said heat exchanger (30) is operatively connected to said preheating tubes (120, 120', 220, 220', 320, 320', 420, 420') for mixing said recirculated flue gases.

2. A boiler (1), according to claim 1, **characterized in that** it comprises means for the forced ventilation of said comburent and/or of said cooled flue gases within said combustion chamber (20).

3. A boiler (1), according to one or more of the claims from 1 to 2, **characterized in that** it comprises means for regulating the flow of said comburent and/or of said flue gases to be emitted into said combustion chamber (20).

4. A boiler (1), according to one or more of the claims from 1 to 3, **characterized in that** it comprises a hydraulic cooling circuit (140, 140', 150, 150', 160, 160') for said combustion chamber (20).

5. A boiler (1), according to one or more of the claims from 1 to 4, **characterized in that** said combustion chamber (20) is provided with a radiant tube (520) arranged axially in the middle section of said boiler (1).

6. A boiler (1), according to claim 5, **characterized in that** said preheating tubes (120, 120', 220, 220', 320, 320', 420, 420') and/or said hydraulic cooling circuit (140, 140', 150, 150', 160, 160') are accommodated in said combustion chamber, outside said radiant tube (520).

7. A boiler (1), according to claim 6, **characterized in that** said preheating tubes (120, 120', 220, 220', 320, 320', 420, 420') and/or said hydraulic cooling circuit (140, 140', 150, 150', 160, 160') are in contact with the outer surface of said radiant tube (520).

8. A boiler (1), according to one or more of the claims from 1 to 7, **characterized in that** it comprises a flue gas circulation circuit (621, 622, 623, 624, 625, 626, 627, 628), operatively connected to said combustion chamber (20) and to said heat exchanger (30).

## Patentansprüche

1. Ein Wassererhitzer (1) für die Erzeugung von warmen Wasser aufweisend einen Brenner (10), Brennstoff-Zuführmittel (110) für den Brenner (10) und Verbrennungsluft-Zuführmittel (210) für den Brenner (10), eine neben dem Brenner (20) angeordnete und mit dem Brenner betriebsfähig verbundene Brennkammer (20), für die flammlose Verbrennung des Brennstoffs und der Verbrennungsluft,
wobei der Brenner (1) eine Mehrzahl von Rohren (120, 120', 220, 220', 320, 320', 420, 420') zum Vorheizen der Verbrennungsluft aufweist, die zumindest teilweise innerhalb der Brennkammer (20) angeordnet und mit den Verbrennungsluft-Zuführmitteln (210) verbunden sind;
wobei dieser mindestens einen Wärmetauscher (30) zum Kühlen der Abgase der Verbrennung aufweist, der zum Rezirkulieren der gekühlten Abgase außerhalb der Brennkammer (20) angeordnet aber mit der Brennkammer betriebsfähig verbunden ist;
**dadurch gekennzeichnet, dass** der Wärmetauscher (30) betriebsfähig mit den Vorheizungsrohren (120, 120', 220, 220', 320, 320', 420, 420') zum Mischen der gekühlten Abgase verbunden ist.

2. Ein Wassererhitzer (1) nach Anspruch 1, **dadurch gekennzeichnet, dass** dieser Mittel zur Zwangsbelüftung der Verbrennungsluft und/oder der gekühlten Abgase innerhalb der Verbrennungskammer (20) aufweist.

3. Ein Wassererhitzer (1) nach einem oder mehreren der Ansprüche 1 oder 2, **dadurch gekennzeichnet, dass** dieser Mittel zur Regulierung der Strömung der in die Verbrennungskammer (20) zu leitenden Verbrennungsluft und/oder gekühlten Abgase.

4. Ein Wassererhitzer (1) nach einem oder mehreren der Ansprüche 1 bis 3, **dadurch gekennzeichnet, dass** dieser einen hydraulischen Kühlkreislauf (140, 140', 150, 150', 160, 160') für die Brennkammer (20) aufweist.

5. Ein Wassererhitzer (1) nach einem oder mehreren der Ansprüche 1 bis 4, **dadurch gekennzeichnet, dass** die Brennkammer (20) mit einem Strahlheizrohr (520) versehen ist, das in einem mittleren Bereich des Wassererhitzers (19) angeordnet ist.

6. Ein Wassererhitzer (1) nach Anspruch 5, **dadurch gekennzeichnet, dass** die Vorheizungsrohre (120, 120', 220, 220', 320, 320', 420, 420') und/oder der hydraulische Kühlkreislauf (140, 140', 150, 150', 160, 160') von der Brennkammer außerhalb des Strahlheizrohrs (520) aufgenommen sind.

7. Ein Wassererhitzer (1) nach Anspruch 6, **dadurch gekennzeichnet, dass** die Vorheizungsrohre (120, 120', 220, 220', 320, 320', 420, 420') und/oder der hydraulische Kühlkreislauf (140, 140', 150, 150', 160, 160') mit der äußeren Oberfläche des Strahlheizrohrs (520) in Kontakt stehen.

8. Ein Wassererhitzer (1) nach einem oder mehreren der Ansprüche 1 bis 7, **dadurch gekennzeichnet, dass** dieser einen Abgaszirkulationskreislauf (621, 622, 623, 624, 625, 626, 627, 628) aufweist, der mit der Brennkammer (20) und dem Wärmetauscher (30) betriebsfähig verbunden ist.

## Revendications

1. Chauffe-eau (1) pour produire de l'eau chaude comprenant un brûleur (10), un moyen d'alimentation en carburant (110) pour ledit brûleur (10) et un moyen d'alimentation en comburant (210) pour ledit brûleur (10), une chambre de combustion (20) adjacente audit brûleur (20) et connectée en fonctionnement à celui-ci, pour la combustion sans flamme dudit carburant et dudit comburant, dans lequel :
ledit chauffe-eau (1) comprend une pluralité de tubes (120, 120', 220, 220', 320, 320', 420, 420') pour préchauffer ledit comburant, au moins partiellement agencés à l'intérieur de ladite chambre de combustion (20) et connectés audit moyen d'alimentation en comburant (210) ; dans lequel :
il comprend au moins un échangeur thermique (30) pour refroidir les gaz de combustion de ladite combustion, ledit échangeur thermique (30) étant situé à l'extérieur mais étant connecté en fonctionnement à ladite chambre de combustion (20) pour faire recirculer lesdits gaz de combustion refroidis, **caractérisé en ce que** :
ledit échangeur thermique (30) est connecté en fonctionnement auxdits tubes de préchauffage (120, 120', 220, 220', 320, 320', 420, 420') pour mélanger lesdits gaz de combustion recirculés.

2. Chauffe-eau (1) selon la revendication 1, **caractérisé en ce qu'**il comprend un moyen pour la ventilation forcée dudit comburant et/ou desdits gaz de combustion refroidis, à l'intérieur de ladite chambre de combustion (20).

3. Chauffe-eau (1) selon une ou plusieurs des revendications 1 et 2, **caractérisé en ce qu'**il comprend un moyen pour réguler la circulation dudit comburant et/ou desdits gaz de combustion destinés à être émis à l'intérieur de ladite chambre de combustion (20).

4. Chauffe-eau (1) selon une ou plusieurs des revendications 1 à 3, **caractérisé en ce qu'**il comprend un circuit de refroidissement hydraulique (140, 140', 150, 150', 160, 160') pour ladite chambre de combustion (20).

5. Chauffe-eau (1) selon une ou plusieurs des revendications 1 à 4, **caractérisé en ce que** ladite chambre de combustion (20) est munie d'un tube radiant (520) agencé axialement dans la section intermédiaire dudit chauffe-eau (1).

6. Chauffe-eau (1) selon la revendication 5, **caractérisé en ce que** lesdits tubes de préchauffage (120, 120', 220, 220', 320, 320', 420, 420') et/ou ledit circuit de refroidissement hydraulique (140, 140', 150, 150', 160, 160') sont logés dans ladite chambre de combustion, à l'extérieur dudit tube radiant (520).

7. Chauffe-eau (1) selon la revendication 6, **caractérisé en ce que** lesdits tubes de préchauffage (120, 120', 220, 220', 320, 320', 420, 420') et/ou ledit circuit de refroidissement hydraulique (140, 140', 150, 150', 160, 160') sont en contact avec la surface externe dudit tube radiant (520).

8. Chauffe-eau (1) selon une ou plusieurs des revendications 1 à 7, **caractérisé en ce qu'**il comprend un circuit de circulation de gaz de combustion (621, 622, 623, 624, 625, 626, 627, 628) connecté en fonctionnement à ladite chambre de combustion (20) et audit échangeur thermique (30).
